(19) Europäisches Patentamt
European Patent Office
Office européen des brevets

(11) **EP 1 315 277 B1**

(12) **EUROPÄISCHE PATENTSCHRIFT**

(45) Veröffentlichungstag und Bekanntmachung des Hinweises auf die Patenterteilung:
**09.02.2005 Patentblatt 2005/06**

(51) Int Cl.⁷: **H02M 7/48**

(21) Anmeldenummer: **01811130.2**

(22) Anmeldetag: **23.11.2001**

(54) **Verfahren zur Symmetrierung eines Dreipunkt-Gleichspannungszwischenkreises und Vorrichtung zur Durchführung des Verfahrens**

Method to equilibrate a three-point intermediate direct voltage circuit and apparatus for using the method

Procédé de symétrisation d'un circuit intérmédiaire DC trois-niveaux et dispositif de mise en place de ce procédé

(84) Benannte Vertragsstaaten:
**CH DE FR GB LI**

(43) Veröffentlichungstag der Anmeldung:
**28.05.2003 Patentblatt 2003/22**

(73) Patentinhaber: **ABB Schweiz AG**
**5400 Baden (CH)**

(72) Erfinder:
• **Daehler, Peter**
**5236 Remigen (CH)**
• **Baechle, Ralf**
**79809 Weilheim (DE)**

(74) Vertreter: **ABB Patent Attorneys**
**c/o ABB Schweiz AG**
**Brown Boveri Strasse 6**
**5400 Baden (CH)**

(56) Entgegenhaltungen:
**EP-A- 0 534 242          US-A- 5 621 628**

## Beschreibung

### Technisches Gebiet

Die Erfindung bezieht sich auf das Gebiet der Leistungselektronik. Sie geht aus von einem aus der unter Artikel 54(3) EPÜ fallenden EP 1 298 781 A1 bekannt gewordenen Verfahren zur Symmetrierung eines Dreipunkt-Gleichspannungszwischenkreises sowie einer aus der unter Artikel 54(3) EPÜ fallenden EP 1 298 781 A1 bekannt gewordenen Vorrichtung zur Durchführung des Verfahrens.

### Stand der Technik

Zweipolige Gleichspannungsquellen mit einer variablen ausgangsseitigen Gleichspannung sind beispielsweise aus Brennstoffzellenanwendungen bekannt, wobei die Brennstoffzelle eine solche Gleichspannungsquelle mit einer variablen Gleichspannung darstellt. Gängigerweise speist eine derartige Gleichspannungsquelle aufgrund der unterschiedlichen Gleichspannungsniveaus einen Dreipunkt-Gleichspannungszwischenkreis, der durch einen ersten Kondensator und einen dazu in Serie geschalteten zweiten Kondensator gebildet ist. Ein Anschluss des ersten Kondensators bildet weiterhin einen oberen Anschluss des Dreipunkt-Gleichspannungszwischenkreises und ein Anschluss des zweiten Kondensators bildet einen unteren Anschluss des Dreipunkt-Gleichspannungszwischenkreises. Am Verschaltungspunkt des ersten Kondensators mit dem zweiten Kondensator ist desweiteren ein Mittelpunktanschluss des Dreipunkt-Gleichspannungszwischenkreises gebildet. Üblicherweise ist mit dem oberen Anschluss, dem Mittelanschluss und dem unteren Anschluss des Dreipunkt-Gleichspannungszwischenkreises eine Stromrichterschaltung verbunden, deren elektronische Schalter durch eine Ansteuerschaltung angesteuert werden.

Eine solche Stromrichterschaltung mit einer Gleichspannungsquelle mit einer variablen Gleichspannung und einem an die Stromrichterschaltung angeschlossenen Dreipunkt-Gleichspannungszwischenkreis ist in der unter Artikel (54(3) fallenden EP 1 298 781 A1 mit der Anmeldenummer EP 01810944.7 angegeben. Zur Kopplung an ein elektrisches Wechselspannungsversorgungsnetz ist ein Umrichter vorgesehen, der gleichspannungsseitig an den Dreipunkt-Gleichspannungszwischenkreis und wechselspannungsseitig an das elektrische Wechselspannungsversorgungsnetz, insbesondere über einen Transformator, angeschlossen ist. Bei einer Ungleichheit einer ersten Zwischenkreisspannung äm ersten Kondensator bezüglich einer zweiten Zwischenkreisspannung am zweiten Kondensator wird die Stromrichterschaltung derart angesteuert, dass sowohl die erste als auch die zweite Zwischenkreisspannung auf einen Zwischenkreisspannungssollwert durch Ausregeln eingestellt wird. Zunächst wird dazu aus der ersten Zwischenkreisspannung und der zweiten Zwischenkreisspannung ein Zwischenkreisspannungsmittelwert gebildet, der dann auf den Zwischenkreisspannungssollwert ausgeregelt wird. Diese Ausregelung bedingt jedoch, dass die Stromrichterschaltung elektrische Energie von der Gleichspannungsquelle beziehen kann, d.h. dass die Gleichspannungsquelle fortlaufend elektrische Energie für den Ausregelvorgang liefern muss und demnach für eine Kompensation der vorstehend erwähnten Ungleichheit benötigt wird. Falls die Gleichspannungsquelle ausfällt, ist jedoch eine solche Kompensation nicht mehr gewährleistet. Soll der Umrichter desweiteren als reiner Blindleistungskompensator für das elektrische Wechselspannungsversorgungsnetz eingesetzt werden und tritt eine Ungleichheit im Dreipunkt-Gleichspannungszwischenkreis wie vorstehend beschrieben auf, so kann diese Unsymmetrie nur in vorstehend beschriebener Weise kompensiert werden, wenn die Stromrichterschaltung elektrische Energie von der Gleichspannungsquelle beziehen kann, d.h. dass die Gleichspannungsquelle fortlaufend elektrische Energie für den Ausregelvorgang liefert.

### Darstellung der Erfindung

Aufgabe der Erfindung ist es deshalb, ein Verfahren zur Symmetrierung eines Dreipunkt-Gleichspannungszwischenkreises anzugeben, durch welches Ungleichheiten von Spannungen an Kondensatoren des Dreipunkt-Gleichspannungszwischenkreises in einfacher Weise und ohne Einbezug einer zusätzlichen elektrischen Energiequelle kompensiert werden können. Ferner ist eine Vorrichtung anzugeben, mit der das Verfahren zur Symmetrierung des Dreipunkt-Gleichspannungszwischenkreises in besonders einfacher Weise durchgeführt werden kann. Diese Aufgaben werden durch die Merkmale des Anspruchs 1 und 7 gelöst. In den Unteransprüchen sind vorteilhafte Weiterbildungen der Erfindung angegeben.

Beim erfindungsgemässen Verfahren zur Symmetrierung eines Dreipunkt-Gleichspannungszwischenkreises wird der Energiefluss elektrischer Energie des Dreipunkt-Gleichspannungszwischenkreises mittels einer Stromrichterschaltung, welche mit einem sten Kondensator und mit einem zweiten Kondensator des Dreipunkt-Gleichspannungszwischenkreises verbunden ist, beeinflusst. Weiterhin wird aus einer ersten an dem ersten Kondensator anliegenden Zwischenkreisspannung und aus einer zweiten an dem zweiten Kondensator anliegenden Zwischenkreisspannung ein Zwischenkreisspannungsmittelwert gebildet, der erfindungsgemäss auf einen vorgebbaren Schwellwert hin überwacht wird. Tritt eine wesentliche Überschreitung des Zwischenkreisspannungsmittelwert bezüglich des Schwellwertes auf, so wird der erste Kondensator mittels der Stromrichterschaltung mit einem Energiespeicher verbunden und danach der Energiespeicher mittels der Stromrichterschaltung mit dem zweiten Kondensator verbunden wird. Durch die Verbindung des ersten Kondensators mit dem Energiespeicher, findet ein Energiefluss vom ersten Kondensator zum Energiespeicher statt, wodurch die erste Zwischenkreisspannung am ersten Kondensator erniedrigt wird. Durch die anschliessende Verbindung des Energiespeichers mit dem zweiten Kondensator findet ein Energiefluss vom Energiespeicher zum zweiten Kondensator statt, wodurch die zweite Zwischenkreisspannung am zweiten Kondensator erhöht wird. Insgesamt werden die erste Zwischenkreisspannung und die zweite Zwischenkreisspannung einander angeglichen, wobei vorteilhaft auf den Bezug von elektrischer Energie aus einer zusätzlichen, wie aus dem Stand der Technik bekannten elektrischen Energiequelle zur Kompensation dieser Ungleichheiten der beiden Zwischenkreisspannungen verzichtet werden kann.

Falls der Zwischenkreisspannungsmittelwert desweiteren den Schwellwert wesentlich unterschreitet, so wird der zweite Kondensator mittels der Stromrichterschaltung mit dem Energiespeicher verbunden und danach der Energiespeicher mittels der Stromrichterschaltung mit dem ersten Kondensator verbunden. Durch die Verbindung des zweiten Kondensators mit dem Energiespeicher, findet ein Energiefluss vom zweiten Kondensator zum Energiespeicher statt, wodurch die zweite Zwischenkreisspannung erniedrigt wird. Durch die anschliessende Verbindung des Energiespeichers mit dem ersten Kondensator findet ein Energiefluss vom Energiespeicher zum ersten Kondensator statt, wodurch die erste Zwischenkreisspannung erhöht wird. Die erste Zwischenkreisspannung und die zweite Zwischenkreisspannung werden auch für diesen Fall einander angeglichen, wobei ebenfalls vorteilhaft auf den Bezug von elektrischer Energie aus einer zusätzlichen, wie aus dem Stand der Technik bekannten elektrischen Energiequelle zur Kompensation dieser Ungleichheiten der beiden Zwischenkreisspannungen verzichtet werden kann.

Die erfindungsgemässe Vorrichtung zur Durchführung des Verfahrens zur Symmetrierung eines Dreipunkt-Gleichspannungszwischenkreises weist die Stromrichterschaltung auf, welche dem ersten Kondensator und mit dem zweiten Kondensator verbunden ist. Weiterhin ist eine Ansteuerschaltung vorgesehen, welche einen Mittelwertbildner zur Bildung des Zwischenkreisspannungsmittelwertes aus der ersten Zwischenkreisspannung und aus der zweiten Zwischenkreisspannung umfasst, wobei die Stromrichterschaltung mit der Ansteuerschaltung verbunden ist. Erfindungsgemäss weist die Ansteuerschaltung eine Überwachungseinrichtung zur Überwachung des Zwischenkreisspannungsmittelwertes auf den vorgebbaren Schwellwert hin auf, wobei die Überwachungseinrichtung mit dem Mittelwertbildner verbunden ist. Desweiteren weist die Stromrichterschaltung einen ersten ansteuerbaren Schalter und einen zweiten ansteuerbaren Schalter auf, wobei ein Energiespeicher vorgesehen ist, der mit dem ersten Schalter und mit dem zweiten Schalter verbunden ist. Darüber hinaus ist der erste Schalter und der zweite Schalter mit der Ansteuerschaltung verbunden ist, wobei der erste Schalter und der zweite Schalter mit dem ersten Kondensator und dem zweiten Kondensator verbindbar ist. Mittels der erfindungsgemässen Vorrichtung ist es vorteilhaft möglich, Unsymmetrien des Dreipunkt-Gleichspannungszwischenkreises, d.h. Ungleichheiten der beiden Zwischenkreisspannungen zu kompensieren, wobei insbesondere der erste Schalter und der zweite Schalter dafür sorgen, dass die Verbindung zwischen erstem Kondensator und Energiespeicher und auch die Verbindung zwischen zweitem Kondensator und dem Energiespeicher in sehr einfacher Weise hergestellt werden kann. Weiterhin entfällt vorteilhaft sowohl eine zusätzliche elektrische Energiequelle, welche elektrische Energie für eine wie aus dem Stand der Technik bekannte Ausregelung der beiden Zwischenkreisspannungen auf einen entsprechenden Zwischenkreisspannungssollwert bereitstellen müsste, als auch eine aufwendige und komplizierte Ansteuerschaltung zur vorstehend genannten Ausregelung. Darüber hinaus kommt die erfindungsgemässe Vorrichtung mit einer minimalen Anzahl an Komponenten aus und kann mit einem geringen Mass an Schaltungsaufwand realisiert werden. Zudem gestaltet sich die Vorrichtung nach der Erfindung aufgrund des einfachen Aufbaus und der wenigen Komponenten als sehr wartungsund reparaturfreundlich. Insgesamt kann demnach mit der erfindungsgemässen Vorrichtung das erfindungsgemässe Verfahren in besonders einfacher Weise ausgeführt werden.

Diese und weitere Aufgaben, Vorteile und Merkmale der vorliegenden Erfindung werden aus der nachfolgenden detaillierten Beschreibung von bevorzugten Ausführungsbeispielen der Erfindung in Verbindung mit der Zeichnung offensichtlich.

## Kurze Beschreibung der Zeichnungen

Es zeigen:

Fig. 1 eine Ausführungsform einer erfindungsgemässen Vorrichtung zur Durchführung eines Verfahrens zur Symmetrierung eines DreipunktGleichspannungszwischenkreises,

Fig. 2 ein Spannungsverlauf an einem ersten und zweiten Kondensator des Dreipunkt-Gleichspannungszwischenkreises bei einer Symmetrierung nach dem erfindungsgemässen Verfahren und

Fig. 3 eine Ausführungsform einer Ansteuerschaltung einer erfindungsgemässen Vorrichtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

## Wege zur Ausführung der Erfindung

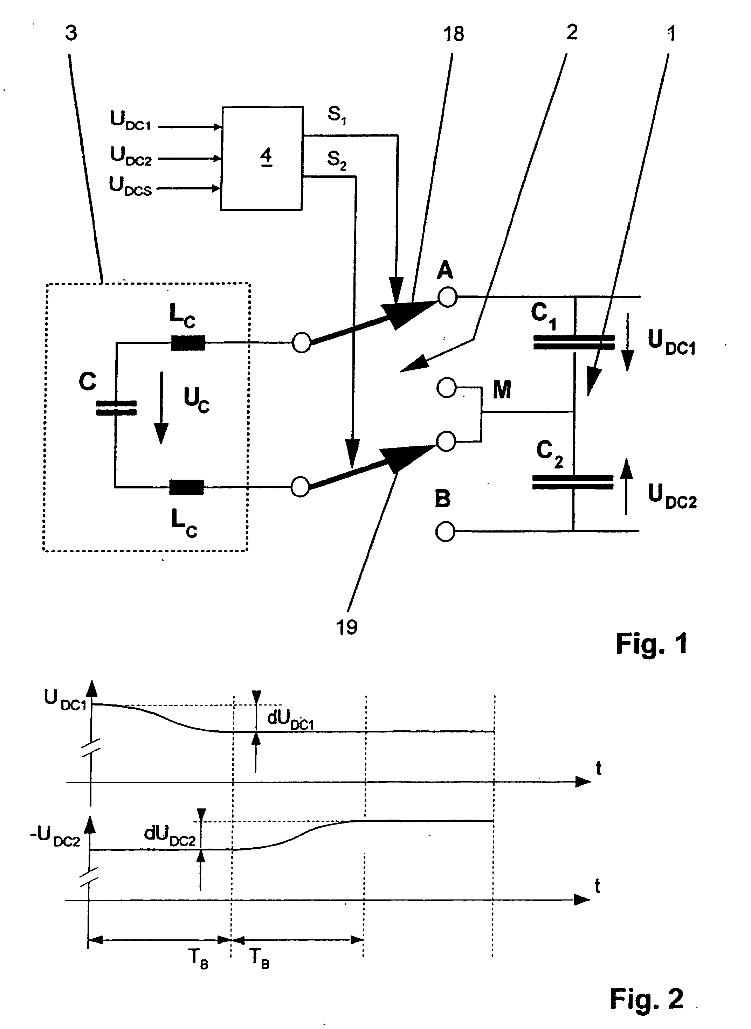

In Fig. 1 ist eine erste Ausführungsform einer erfindungsgemässen Vorrichtung zur Durchführung eines Verfahrens zur Symmetrierung eines Dreipunkt-Gleichspannungszwischenkreises 1 gezeigt. Die Vorrichtung weist eine Stromrichterschaltung 2 auf, welche mit einem ersten Kondensator $C_1$ und mit dem zweiten Kondensator $C_2$ verbunden ist. Die beiden Kondensatoren $C_1$, $C_2$ sind gemäss Fig. 1 in Serie geschaltet, wobei die Kondensatoren $C_1$, $C_2$ an dem Punkt, an dem sie miteinander verbunden sind, einen Verbindungsanschluss M bilden. Ferner weist der erste Kondensator $C_1$ einen Anschluss A und der zweite Kondensator $C_2$ einen Anschluss B auf. Weiterhin ist eine Ansteuerschaltung 4 vorgesehen, die mit der Stromrichterschaltung 2 verbunden ist.

Beim erfindungsgemässen Verfahren zur Symmetrierung eines Dreipunkt-Gleichspannungszwischenkreises wird der Energiefluss elektrischer Energie des Dreipunkt-Gleichspannungszwischenkreises 1 mittels der Stromrichterschaltung 2 beeinflusst. Aus einer ersten an dem ersten Kondensator $C_1$ anliegenden Zwischenkreisspannung $U_{DC1}$ und aus einer zweiten an dem zweiten Kondensator $C_2$ anliegenden Zwischenkreisspannung $U_{DC2}$ wird weiterhin ein Zwischenkreisspannungsmittelwert $\overline{U_{DC}}$ gebildet, der erfindungsgemäss auf einen vorgebbaren Schwellwert $U_{DCS}$ hin überwacht wird. Der Schwellwert $U_{DCS}$ wird vorzugsweise in der Grössenordnung Null gewählt. Gemäss Fig. 1 ist die erste Zwischenkreisspannung $U_{DC1}$ vom Anschluss A des ersten Kondensators $C_1$ auf den Verbindungsanschluss M und die zweite Zwischenkreisspannung $U_{DC2}$ vom Anschluss B des zweiten Kondensators $C_2$ auf den Verbindungsanschluss M bezogen. Vorzugsweise wird der Zwischenkreisspannungsmittelwert $\overline{U_{DC}}$ nach Massgabe der Formel

$$\overline{U_{DC}} = \frac{U_{DC1} + U_{DC2}}{2}$$

gebildet, so dass sich im symmetrischen Zustand des Dreipunkt-Gleichspannungszwischenkreises 1, d.h. bei wesentlicher Gleichheit der beiden Zwischenkreisspannungen $U_{DC1}$, $U_{DC2}$ ein Zwischenkreisspannungsmittelwert $\overline{U_{DC}}$ von im wesentlichen Null ergibt.

Tritt nun eine wesentliche Überschreitung des Zwischenkreisspannungsmittelwertes $\overline{U_{DC}}$ bezüglich des Schwellwertes $U_{DCS}$ auf, d.h. ist die erste Zwischenkreisspannung $U_{DC1}$ grösser als die zweite Zwischenkreisspannung $U_{DC2}$, so wird der erste Kondensator $C_1$ mittels der Stromrichterschaltung 2 mit einem Energiespeicher 3 verbunden. Danach wird der Energiespeicher 3 mittels der Stromrichterschaltung 2 mit dem zweiten Kondensator $C_2$ verbunden. Wird für den Energiespeicher 3 ein Kondensator mit dem Wert C gewählt, wobei C wesentlich kleiner ist als der ersten Kondensators $C_1$ und der zweite Kondensators $C_2$, so ist der Energiespeicher 3 vor der vorstehend beschriebenen Verbindung zum ersten Kondensator $C_1$ im wesentlichen entladen und lädt sich nach dieser Verbindung im wesentlichen auf einen Wert der doppelten ersten Zwischenkreisspannung $U_{DC1}$ auf. Durch die Verbindung des ersten Kondensators $C_1$ mit dem Energiespeicher 3, findet somit ein Energiefluss vom ersten Kondensator $C_1$ zum Energiespeicher 3 statt, wodurch die erste Zwischenkreisspannung $U_{DC1}$ um einen Wert $dU_{DC1}$ erniedrigt wird. Durch die danach folgende Verbindung des Energiespeichers 3 mit dem zweiten Kondensator $C_2$ findet ein Energiefluss vom Energiespeicher 3 zum zweiten Kondensator $C_2$ statt, wodurch die zweite Zwischenkreisspannung $U_{DC2}$ um einen Wert $dU_{DC2}$ erhöht wird. In Fig. 2 ist ein Spannungsverlauf am ersten und zweiten Kondensator $C_1$, $C_2$ des Dreipunkt-Gleichspannungszwischenkreises 1 bei einer Symmetrierung nach dem erfindungsgemässen Verfahren für den Fall, dass eine wesentliche Überschreitung des Zwischenkreisspannungsmittelwertes $\overline{U_{DC}}$ bezüglich des Schwellwertes $U_{DCS}$ auftritt, gezeigt.

Durch die Verbindung des ersten Kondensators $C_1$ mit dem Energiespeicher 3 und die nachfolgende Verbindung des Energiespeichers 3 mit dem zweiten Kondensator $C_2$ werden die erste Zwischenkreisspannung $U_{DC1}$ und die zweite Zwischenkreisspannung $U_{DC2}$ einander angeglichen, wobei vorteilhaft auf den Bezug von elektrischer Energie aus einer zusätzlichen, wie aus dem Stand der Technik bekannten elektrischen Energiequelle zur Kompensation dieser Ungleichheiten der beiden Zwischenkreisspannungen $U_{DC1}$, $U_{DC2}$ verzichtet werden kann.

Sollte der Zwischenkreisspannungsmittelwert $\overline{U_{DC}}$ nach den vorstehend beschriebenen Schaltvorgängen der Stromrichterschaltung 2 noch wesentlich grösser als der Schwellwert $U_{DCS}$ sein, so wird der erste Kondensator $C_1$ erneut mittels der Stromrichterschaltung 2 für die vorgebbare Zeit $T_B$ mit dem Energiespeicher 3 verbunden, der danach für die vorgebbare Zeit $T_B$ mit dem zweiten Kondensator $C_2$ verbunden wird. Dieser Vorgang wird so lange wiederholt, bis der Zwischenkreisspannungsmittelwert $\overline{U_{DC}}$ mit dem Schwellwert $U_{DCS}$ wesentlich übereinstimmt. Tritt diese wesentliche Übereinstimmung ein, d.h. falls die aufgetretenen Ungleichheiten am Dreipunkt-Gleichspannungszwischenkreis 1 im wesentlichen kompensiert sind, so wird der Energiespeicher 3 erfindungsgemäss mittels der Stromrichterschaltung 2 mit dem Verbindungsanschluss M verbunden.

Gemäss Fig. 2 erfolgt die Verbindung des ersten Kondensators C, mit dem Energiespeicher 3 und danach die Verbindung des Energiespeichers 3 mit dem zweiten Kondensator $C_2$ vorteilhaft jeweils innerhalb einer vorgebbaren Zeit $T_B$. Die vorgebbare Zeit $T_B$ wird in Abhängigkeit der Werte des ersten Kondensators $C_1$, des zweiten Kondensators $C_2$ und des Energiespeichers 3 bestimmt. Vorzugsweise wird die vorgebbare Zeit $T_B$ nach Massgabe der Formel

$$T_B = \pi \cdot \sqrt{2L_C \cdot \frac{C \cdot \dfrac{C_1 + C_2}{2}}{C + \dfrac{C_1 + C_2}{2}}},$$

bestimmt, wobei C ein Kondensator des Energiespeichers 3 und $L_c$ eine Induktivität des Energiespeichers 3 gemäss Fig. 1 ist.

Falls der Zwischenkreisspannungsmittelwert $\overline{U_{DC}}$ den Schwellwert $U_{DCS}$ wesentlich unterschreitet, d.h. ist die zweite Zwischenkreisspannung $U_{DC2}$ grösser als die erste Zwischenkreisspannung $U_{DC1}$, so wird nach dem erfindungsgemässen Verfahren der zweite Kondensator $C_2$ mittels der Stromrichterschaltung 2 mit dem Energiespeicher 3 verbunden und danach der Energiespeicher 3 mittels der Stromrichterschaltung 2 mit dem ersten Kondensator $C_1$ verbunden. Durch die Verbindung des zweiten Kondensators $C_2$ mit dem Energiespeicher 3 findet ein Energiefluss vom zweiten Kondensator $C_2$ zum Energiespeicher 3 statt, wodurch die zweite Zwischenkreisspannung $U_{DC2}$, in ähnlicher Weise wie in Fig. 2 für die erste Zwischenkreisspannung $U_{DC1}$ gezeigt, um einen Wert $dU_{DC2}$ erniedrigt wird. Durch die anschliessende Verbindung des Energiespeichers 3 mit dem ersten Kondensator $C_1$ findet ein Energiefluss vom Energiespeicher 3 zum ersten Kondensator $C_1$ statt, wodurch die erste Zwischenkreisspannung $U_{DC1}$, in ähnlicher Weise wie in Fig. 2 für die zweite Zwischenkreisspannung $U_{DC2}$ gezeigt, um einen Wert $dU_{DC1}$ erhöht wird. Die erste Zwischenkreisspannung $U_{DC1}$, und die zweite Zwischenkreisspannung $U_{DC2}$ werden auch für diesen Fall vorteilhaft einander angeglichen.

In analoger Weise wie vorstehend anhand von Fig. 2 für den Zwischenkreisspannungsmittelwert $\overline{U_{DC}}$, der den Schwellwert $U_{DCS}$ wesentlich überschreitet, erläutert, erfolgt bei einem wesentlichen Unterschreiten des Schwellwertes $U_{DCS}$ die Verbindung des ersten Kondensators $C_1$ mit dem Energiespeicher 3 und danach die Verbindung des Energiespeichers 3 mit dem zweiten Kondensator $C_2$ vorteilhaft ebenfalls jeweils innerhalb der vorgebbaren Zeit $T_B$. Die vorgebbare Zeit $T_B$ wird in Abhängigkeit der Werte des ersten Kondensators $C_1$, des zweiten Kondensators $C_2$ und des Energiespeichers 3 bestimmt, wobei die vorstehend angegebene Formel für die vorgebbare Zeit $T_B$ ebenfalls gilt.

Sollte der Zwischenkreisspannungsmittelwert $\overline{U_{DC}}$ nach den vorstehend beschriebenen Schaltvorgängen der Stromrichterschaltung 2 noch wesentlich kleiner als der Schwellwert $U_{DCS}$ sein, so wird der zweite Kondensator $C_2$ erneut mittels der Stromrichterschaltung 2 für die vorgebbare Zeit $T_B$ mit dem Energiespeicher 3 verbunden, der danach für die vorgebbare Zeit $T_B$ mit dem ersten Kondensator $C_1$ verbunden wird. Dieser Vorgang wird so lange wiederholt, bis der Zwischenkreisspannungsmittelwert $\overline{U_{DC}}$ mit dem Schwellwert $U_{DCS}$ wesentlich übereinstimmt. Falls diese wesentliche Übereinstimmung eintritt, d.h. falls die aufgetretenen Ungleichheiten am Dreipunkt-Gleichspannungszwischenkreis im wesentlichen kompensiert sind, wird der Energiespeicher 3 erfindungsgemäss mittels der Stromrichterschaltung 2 mit dem Verbindungsanschluss M verbunden. Dadurch wird erreicht, dass sich der Energiespeicher 3 sicher von einer eventuell noch vorhandenen Restladung entladen kann.

Insgesamt stellt das erfindungsgemässe Verfahren zur Symmetrierung des Dreipunkt-Gleichspannungszwischenkreises 1 eine besonders einfache und kostengünstige Lösung dar, mit welchem vorteilhaft Ungleichheiten die Zwischenkreisspannungen $U_{DC1}$, $U_{DC2}$ an Kondensatoren $C_1$, $C_2$ des Dreipunkt-Gleichspannungszwischenkreises 1 in einfacher Weise und ohne Einbezug einer zusätzlichen elektrischen Energiequelle kompensiert werden können. Wird die Stromrichterschaltung 2 mit dem Energiespeicher 3 über den Dreipunkt-Gleichspannungszwischenkreis 1 an einen Umrichter angekoppelt, welcher Umrichter als Blindleistungskompensator für ein elektrisches Wechselspannungsversorgungsnetz eingesetzt werden soll, so kann das vorstehend beschriebene erfindungsgemässe Verfahren vorteilhaft zur Symmetrierung des Dreipunkt-Gleichspannungszwischenkreises 1 eingesetzt werden, falls Ungleichheiten der beiden Zwischenkreisspannungen $U_{DC1}$, $U_{DC2}$ bei dieser Anwendung auftreten sollten. Es versteht sich, dass sich das erfindungsgemässe Verfahren zur Symmetrierung des Dreipunkt-Gleichspannungszwischenkreises 1 allgemein bei solchen Anwendungen einsetzen lässt, wo Ungleichheiten der beiden Zwischenkreisspannungen $U_{DC1}$, $U_{DC2}$ im Dreipunkt-Gleichspannungszwischenkreis 1 auftreten können.

Die erfindungsgemässe Vorrichtung zur Durchführung des Verfahrens zur Symmetrierung eines Dreipunkt-Gleichspannungszwischenkreises 1 weist, wie bereits erwähnt, die Stromrichterschaltung 2 auf, welche mit dem ersten Kondensator $C_1$ und mit dem zweiten Kondensator $C_2$ verbunden ist. Weiterhin ist die bereits erwähnte Ansteuerschaltung 4 vorgesehen. Desweiteren weist die Stromrichterschaltung 2 einen ersten ansteuerbaren Schalter 18 und einen zweiten ansteuerbaren Schalter 19 auf, wobei der bereits erwähnte Energiespeicher 3 mit dem ersten Schalter 18 und mit dem zweite Schalter 19 verbunden ist. Der erste und der zweite ansteuerbare Schalter 18, 19 weist vorteilhaft Leistungshalbleiterschalter auf, wobei jeder Leistungshalbleiterschalter vorzugsweise einen integrierten ansteuerelektroden-kommutierten Thyristor oder einen Bipolartransistor mit isoliert angeordneter Ansteuerelektrode oder einen Metaloxid-Feldeffekttransistor aufweist. Darüber hinaus ist der erste Schalter 18 und der zweite Schalter 19 mit der Ansteuerschaltung verbunden ist, wobei der erste Schalter 18 und der zweite Schalter 18 auf Betätigungssignale $S_1$, $S_2$ der Ansteuerschaltung 4 hin mit dem ersten Kondensator $C_1$ und dem zweiten Kondensator $C_2$ verbindbar ist.

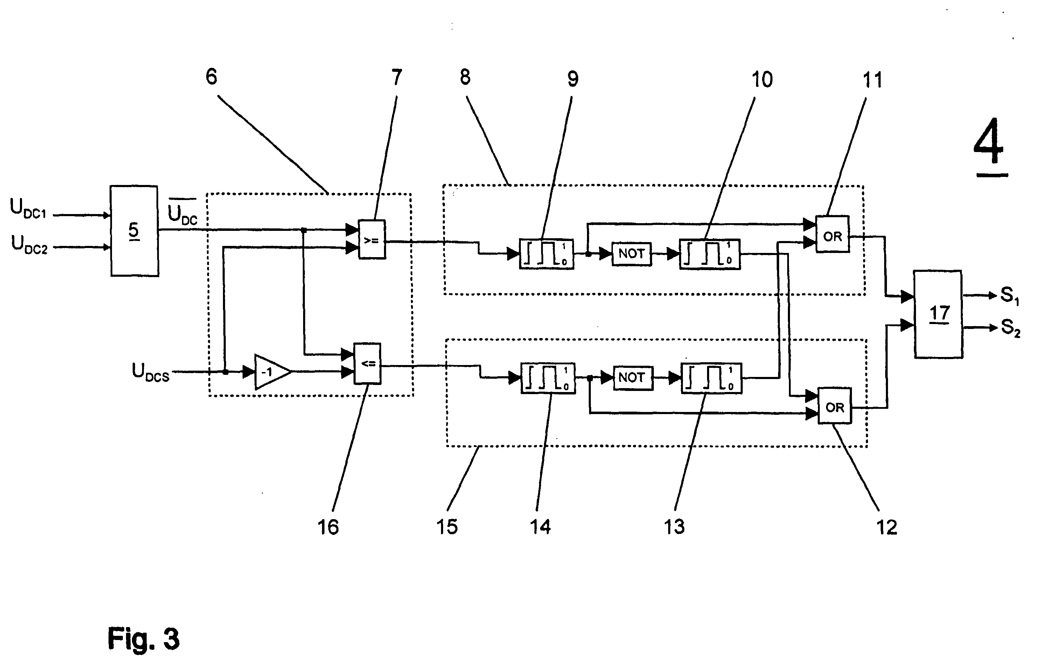

Nachfolgend wird die Ansteuerschaltung 4 anhand einer Ausführungsform gemäss Fig. 3 näher beschrieben. Gemäss Fig. 3 weist die Ansteuerschaltung 4 einen Mittelwertbildner 5 zur Bildung des Zwischenkreisspannungsmittelwertes $\overline{U_{DC}}$ aus der ersten Zwischenkreisspannung $U_{DC1}$ und aus der zweiten Zwischenkreisspannung $U_{DC2}$ auf. Dem Mittelwertbildner 5 sind dazu eingangsseitig die beiden Zwischenkreisspannungen $U_{DC1}$, $U_{DC2}$ zugeführt, wobei am Ausgang des Mittelwertbildners 5 der nach der bereits erwähnten Formel gebildete Zwischenkreisspannungsmittelwert $\overline{U_{DC}}$ anliegt. Erfindungsgemäss weist die Ansteuerschaltung 4 gemäss Fig. 3 eine Überwachungseinrichtung 6 zur Überwachung des Zwischenkreisspannungsmittelwertes $\overline{U_{DC}}$ auf den vorgebbaren Schwellwert $U_{DCS}$ hin auf, wobei die Überwachungseinrichtung 6 mit dem Mittelwertbildner 5 verbunden ist, wodurch der Überwachungseinrichtung 6 der Zwischenkreisspannungsmittelwert $U_{DC}$ zugeführt ist. Femer ist der Überwachungseinrichtung 6 der vorgebbare Schwellwert $U_{DCS}$ eingangsseitig zugeführt. Die Überwachungseinrichtung 6 weist einen ersten Vergleicher 7 und eine zweiten Vergleicher 16 auf, wobei dem ersten Vergleicher 7 der Zwischenkreisspannungsmittelwert $\overline{U_{DC}}$ und der vorgebbare Schwellwert $U_{DCS}$ und dem zweiten Vergleicher 16 der Zwischenkreisspannungsmittetwert $\overline{U_{DC}}$ und der vorgebbare Schwellwert $U_{DCS}$ als negierter Wert zugeführt sind. Ist der Zwischenkreisspannungsmittelwert $\overline{U_{DC}}$ grösser als der vorgebbare Schwellwert $U_{DCS}$, so liegt am Ausgang des ersten Vergleichers 7 logisch "1", ansonsten logisch "0" an. Ist der Zwischenkreisspannungsmittelwert $U_{DC}$ kleiner als der vorgebbare Schwellwert $U_{DCS}$, so liegt am Ausgang des zweiten Vergleichers 16 logisch "1", ansonsten logisch "0" an.

Mittels der Ansteuerschaltung 4, insbesondere mittels den beiden Vergleichern 7, 16 kann auf sehr einfache Weise ein Überschreiten beziehungsweise ein Unterschreiten des Zwischenkreisspannungsmittelwertes $\overline{U_{DC}}$ bezüglich des vorgebbaren Schwellwertes $U_{DCS}$ detektiert werden, wozu zudem nur ein geringer Bauteilaufwand notwendig ist.

Gemäss Fig. 3 weist die Ansteuerschaltung 4 ferner eine erste Schaltzustandsausgabeeinrichtung 8 und eine zweite Schaltzustandsausgabeeinrichtung 15, wobei die erste Schaltzustandsausgabeeinrichtung 8 mit dem Ausgang des ersten Vergleichers 7 und die zweite Schaltzustandsausgabeeinrichtung 15 mit dem Ausgang des zweiten Vergleichers 16 verbunden ist. Die erste Schaltzustandsausgabeeinrichtung 8 umfasst zudem eine erste monostabile Kippstufe 9 und eine zweite monostabile Kippstufe 10. Weiterhin umfasst die zweite Schaltzustandsausgabeeinrichtung 15 eine erste monostabile Kippstufe 14 und eine zweite monostabile Kippstufe 13. Sämtliche monostabilen Kippstufen 9, 10, 13, 14 sprechen auf ein eingangsseitiges Signal mit einer positiven Flanke an und sind derart ausgebildet, dass sie sich nach dem Ansprechen während der vorgebbaren Zeit $T_B$ in einem nicht-stabilen Zustand, d.h. gemäss Fig. 3 im Zustand logisch "1" befinden und danach in einen stabilen Zustand, d.h. gemäss Fig. 3 in den Zustand logisch "0" umschalten. Die vorgebbare Zeit $T_B$ ist in Abhängigkeit der Werte des ersten Kondensators $C_1$, des zweiten Kondensators $C_2$ und des Energiespeichers 3 bestimmbar, wobei die vorstehend angegebene Formel für die vorgebbare Zeit $T_B$ gilt.

Gemäss Fig. 3 ist die erste monostabile Kippstufe 9 der ersten Schaltzustandsausgabeeinrichtung 8 mit dem ersten Vergleicher 7 und die erste monostabile Kippstufe 14 der zweiten Schaltzustandsausgabeeinrichtung 15 mit dem zweiten Vergleicher 16 verbunden. Darüber hinaus ist der Ausgang der ersten monostabilen Kippstufe 9 der ersten Schaltzustandsausgabeeinrichtung 8 mit der zweiten monostabilen Kippstufe 10 der ersten Schaltzustandsausgabeeinrichtung 8 mittelbar, d.h. gemäss Fig. 3 über einen Negierer verbunden. Weiterhin ist der Ausgang der ersten monostabilen Kippstufe 9 der ersten Schaltzustandsausgabeeinrichtung 8 mit einer ODER-Logikschaltung 11 der ersten Schaltzustandsausgabeeinrichtung 8 verbunden. Gemäss Fig. 3 ist der Ausgang ersten monostabilen Kippstufe 14 der zweiten Schaltzustandsausgabeeinrichtung 15 mit der zweiten monostabilen Kippstufe 13 der zweiten Schaltzustandsausgabeeinrichtung 15 mittelbar, d.h. gemäss Fig. 3 über einen Negierer verbunden. Zudem ist der Ausgang der ersten monostabilen Kippstufe 14 der zweiten Schaltzustandsausgabeeinrichtung 15 mit einer ODER-Logikschaltung 12 der zweiten Schaltzustandsausgabeeinrichtung 15 verbunden. Der Ausgang der zweiten monostabilen Kippstufe 10 der ersten Schaltzustandsausgabeeinrichtung 8 ist gemäss Fig. 3 mit der ODER-Logikschaltung 12 der zweiten Schaltzustandsausgabeeinrichtung 15 verbunden. Ferner ist der Ausgang der zweiten monostabilen Kippstufe 13 der zweiten Schaltzustandsausgabeeinrichtung 15 gemäss Fig. 3 mit der ODER-Logikschaltung 11 der ersten Schaltzustandsausgabeeinrichtung 8 verbunden ist. Darüber hinaus weist die Ansteuerschaltung 4 gemäss Fig. 3 eine Betätigungseinrichtung 17 auf, die der Betätigung des ersten Schalters 18 und des zweiten Schalters 19 dient, und die dazu gemäss Fig. 1 mit den beiden Schaltern 18, 19 verbunden ist. Gemäss Fig. 3 ist der Eingang der Betätigungseinrichtung 17 mit dem Ausgang der ODER-Logikschaltung 11 der ersten Schaltzustandsausgabeeinrichtung 8 und mit dem Ausgang der ODER-Logikschaltung 12 der zweiten Schaltzustandsausgabeeinrichtung 15 verbunden. Am Ausgang der Betätigungseinrichtung liegen weiterhin die

bereits erwähnten Betätigungssignale $S_1$, $S_2$ an, wobei der erste Schalter 18 und der zweite Schalter 19 wie bereits erwähnt auf Betätigungssignale $S_1$, $S_2$ der Betätigungseinrichtung 17 der Ansteuerschaltung 4 hin mit dem ersten Kondensator $C_1$ und dem zweiten Kondensator $C_2$ verbindbar sind.

Mittels der Schaltzustandsausgabeeinrichtungen 8, 15, insbesondere mittels der Kippstufen 9, 10, 13, 14 kann die vorgebbare Zeit $T_B$, für welche die vorstehend beschriebenen Verbindungen der Kondensatoren $C_1$, $C_2$ zum Energiespeicher 3 bestehen sollen, sehr einfach eingestellt und realisiert werden. Desweiteren ist durch die ODER-Logikschaltung 11 der ersten Schaltzustandsausgabeeinrichtung 8 und durch die ODER-Logikschaltung 12 der zweiten Schaltzustandsausgabeeinrichtung 15 eine einfache Möglichkeit gegeben, logische Signale zu erzeugen, aus welchen aufgrund der nachfolgend beschriebenen Signalkombinationen Schaltzustände der Schalter 18, 19 der Stromrichterschaltung 2 abgeleitet werden können, wobei die Betätigungseinrichtung 17 daraus die entsprechenden Betätigungssignale $S_1$, $S_2$ generiert.

Nachfolgend wird die Funktion Ansteuerschaltung 4, insbesondere die Generierung der Betätigungssignale $S_1$, $S_2$ durch die Betätigungseinrichtung 17 anhand von Fig. 3 und Fig. 1 detailliert beschrieben. Wird von der Überwachungseinrichtung ein Überschreiten des Zwischenkreisspannungsmittelwert $\overline{U_{DC}}$ bezüglich des vorgebbaren Schwellwertes $U_{DCS}$ detektiert, so wird für die Zeit $T_B$ von der ODER-Logikschaltung 11 der ersten Schaltzustandsausgabeeinrichtung 8 logisch "1" und von der ODER-Logikschaltung 12 der zweiten Schaltzustandsausgabeeinrichtung 15 logisch "0" ausgegeben. Auf diese Ausgabe der beiden ODER-Logikschaltungen 11, 12 hin wird ein erstes Betätigungssignal S, derart durch die Betätigungseinrichtung 17 generiert, dass der erste Schalter 18 an den Anschluss A geschaltet wird. Desweiteren wird ein zweites Betätigungssignal $S_2$ derart durch die Betätigungseinrichtung 17 generiert, dass der zweite Schalter 19 an den Verbindungsanschluss M geschaltet wird. Demnach entsteht die gewünschte Verbindung zwischen dem Kondensator $C_1$ und dem Energiespeicher 3. Danach wird für die Zeit $T_B$ von der ODER-Logikschaltung 11 der ersten Schaltzustandsausgabeeinrichtung 8 logisch "0" und von der ODER-Logikschaltung 12 der zweiten Schaltzustandsausgabeeinrichtung 15 logisch "1" ausgegeben. Auf diese Ausgabe der beiden ODER-Logikschaltungen 11, 12 hin wird das erste Betätigungssignal $S_1$ derart von der Betätigungseinrichtung 17 generiert, dass der erste Schalter 18 an den Verbindungsanschluss M geschaltet wird. Zudem wird das zweite Betätigungssignal $S_2$ derart generiert, dass der zweite Schalter 19 an den Anschluss B geschaltet wird. Dadurch entsteht die gewünschte Verbindung zwischen dem Energiespeicher 3 und dem Kondensator $C_2$.

Wird von der Überwachungseinrichtung hingegen ein Unterschreiten des Zwischenkreisspannungs-mittelwert $\overline{U_{DC}}$ bezüglich des vorgebbaren Schwellwertes $U_{DCS}$ detektiert, so wird für die Zeit $T_B$ von der ODER-Logikschaltung 11 der ersten Schattzustandsausgabeeinrichtung 8 logisch "0" und von der ODER-Logikschaltung 12 der zweiten Schaltzustandsausgabeeinrichtung 15 logisch "1" ausgegeben. Auf diese Ausgabe der beiden ODER-Logikschaltungen 11, 12 hin wird das erste Betätigungssignal $S_1$ derart generiert, dass der erste Schalter 18 an den Verbindungsanschluss M geschaltet wird. Darüber hinaus wird das zweite Betätigungssignal $S_2$ derart generiert, dass der zweite Schalter 19 an den Anschluss B geschaltet wird. Demnach entsteht die gewünschte Verbindung zwischen dem Kondensator $C_2$ und dem Energiespeicher 3. Danach wird für die Zeit $T_B$ von der ODER-Logikschaltung 11 der ersten Schaltzustandsausgabeeinrichtung 8 logisch "1" und von der ODER-Logikschaltung 12 der zweiten Schaltzustandsausgabeeinrichtung 15 logisch "0" ausgegeben. Auf diese Ausgabe der beiden ODER-Logikschaltungen 11, 12 hin wird das erste Betätigungssignal $S_1$ derart generiert, dass der erste Schalter 18 an den Anschluss A geschaltet wird, und das zweite Betätigungssignal $S_2$ derart generiert, dass der zweite Schalter 19 an den Verbindungsanschluss M geschaltet wird. Dadurch entsteht die gewünschte Verbindung zwischen dem Energiespeicher 3 und dem Kondensator $C_1$.

Falls der Zwischenkreisspannungsmittelwert $\overline{U_{DC}}$ mit dem Schwellwert $U_{DCS}$ wesentlich übereinstimmt, d.h. falls die aufgetretenen Ungleichheiten am Dreipunkt-Gleichspannungszwischenkreis im wesentlichen kompensiert sind, wird von der ODER-Logikschaltung 11 der ersten Schaltzustandsausgabeeinrichtung 8 logisch "1" und von der ODER-Logikschaltung 12 der zweiten Schaltzustandsausgabeeinrichtung 15 logisch "1" oder von der ODER-Logikschaltung 11 der ersten Schaltzustandsausgabeeinrichtung 8 logisch "0" und von der ODER-Logikschaltung 12 der zweiten Schaltzustandsausgabeeinrichtung 15 logisch "0" ausgegeben. Auf diese beiden Ausgabemöglichkeiten der beiden ODER-Logikschaltungen 11, 12 hin wird das erste Betätigungssignal $S_1$ und das zweite Betätigungssignal $S_2$ derart generiert, dass der erste Schalter 18 und der zweite Schalter an den Verbindungsanschluss M geschaltet wird. Dadurch wird der Energiespeicher 3 in gewünschtem Masse mit dem Verbindungsanschluss M verbunden.

Insgesamt stellt die erfindungsgemässe Vorrichtung eine äusserst kostengünstige Lösung dar, da sie mit einem Minimum an Komponenten auskommt und somit einfach zu realisieren ist und aufwendige Wartungs- und Reparaturarbeiten reduziert werden können. Weiterhin ist es mittels der erfindungsgemässen Vorrichtung vorteilhaft möglich, Unsymmetrien des Dreipunkt-Gleichspannungszwischenkreises auf sehr einfache Weise zu kompensieren, wobei insbesondere die mit der Ansteuerschaltung 4 verbundenen Schalter 18, 19 der Stromrichterschaltung 2 dafür sorgen, dass die vorstehend erwähnten Verbindungen einfach und problemlos hergestellt werden können. Demnach kann mit der erfindungsgemässen Vorrichtung das erfindungsgemässe Verfahren in besonders einfacher Weise ausgeführt werden.

**Bezugszeichenliste**

1     Dreipunkt-Gleichspannungszwischenkreis
2     Stromrichterschaltung
3     Energiespeicher
4     Ansteuerschaltung
5     Mittelwertbildner
6     Überwachungseinrichtung
7     erster Vergleicher
8     erste Schaltzustandsausgabeeinrichtung
9     erste monostabile Kippstufe der ersten Schaltzustandsausgabeeinrichtung
10    zweite monostabile Kippstufe der ersten Schaltzustandsausgabeeinrichtung
11    ODER-Logikschaltung der ersten Schaltzustandsausgabeeinrichtung
12    ODER-Logikschaltung der zweiten Schaltzustandsausgabeeinrichtung
13    zweite monostabile Kippstufe der zweiten Schaltzustandsausgabeeinrichtung
14    erste monostabile Kippstufe der zweiten Schaltzustandsausgabeeinrichtung
15    zweite Schaltzustandsausgabeeinrichtung
16    zweiter Vergleicher
17    Betätigungseinrichtung
18    erster Schalter
19    zweiter Schalter

**Patentansprüche**

1.  Verfahren zur Symmetrierung eines Dreipunkt-Gleichspannungszwischenkreises (1), bei dem eine mit einem ersten Kondensator ($C_1$) und mit einem zweiten Kondensator ($C_2$) des Dreipunkt-Gleichspannungszwischenkreises (1) verbundene Stromrichterschaltung (2) den elektrischen Energiefluss des Dreipunkt-Gleichspannungszwischenkreis (1) beeinflusst und bei dem aus einer ersten an dem ersten Kondensator ($C_1$) anliegenden Zwischenkreisspannung ($U_{DC1}$) und aus einer zweiten an dem zweiten Kondensator ($C_2$) anliegenden Zwischenkreisspannung ($U_{DC2}$) ein Zwischenkreisspannungsmittelwert ($\overline{U_{DC}}$) gebildet wird, wobei der Zwischenkreisspannungsmittelwert ($\overline{U_{DC}}$) auf einen vorgebbaren Schwellwert ($U_{DCS}$) hin überwacht wird,
    bei wesentlichem Überschreiten des Schwellwertes ($U_{DCS}$) der erste Kondensator ($C_1$) mittels der Stromrichterschaltung (2) mit einem Energiespeicher (3) verbunden wird und danach der Energiespeicher (3) mittels der Stromrichterschaltung (2) mit dem zweiten Kondensator ($C_2$) verbunden wird, und
bei wesentlichem Unterschreiten des Schwellwertes ($U_{DCS}$) der zweite Kondensator ($C_2$) mittels der Stromrichterschaltung (2) mit dem Energiespeicher (3) verbunden wird und danach der Energiespeicher (3) mittels der Stromrichterschaltung (2) mit dem ersten Kondensator ($C_1$) verbunden wird.

2.  Verfahren nach Anspruch 1, **dadurch gekennzeichnet, dass** bei wesentlichem Überschreiten des Schwellwertes ($U_{DCS}$) die Verbindung des ersten Kondensators ($C_1$) mit dem Energiespeicher (3) und danach die Verbindung des Energiespeichers (3) mit dem zweiten Kondensator ($C_2$) jeweils innerhalb einer vorgebbaren Zeit ($T_B$) erfolgt.

3.  Verfahren nach Anspruch 1 oder 2, **dadurch gekennzeichnet, dass** bei wesentlichem Unterschreiten des Schwellwertes ($U_{DCS}$) die Verbindung des zweiten Kondensators ($C_2$) mit dem Energiespeicher (3) und danach die Verbindung des Energiespeichers (3) mit dem ersten Kondensator ($C_1$) jeweils innerhalb einer vorgebbaren Zeit ($T_B$) erfolgt.

4.  Verfahren nach Anspruch 2 oder 3, **dadurch gekennzeichnet, dass** die vorgebbare Zeit ($T_B$) in Abhängigkeit der Werte des ersten Kondensators ($C_1$), des zweiten Kondensators ($C_2$) und des Energiespeichers (3) bestimmt wird.

5.  Verfahren nach Anspruch 4, **dadurch gekennzeichnet, dass** die vorgebbare Zeit ($T_B$) nach Massgabe der Formel

$$T_B = \pi \cdot \sqrt{2L_C \cdot \frac{C \cdot \dfrac{C_1 + C_2}{2}}{C + \dfrac{C_1 + C_2}{2}}}$$

bestimmt wird, wobei C ein Kondensator des Energiespeichers 3 und $L_c$ eine Induktivität des Energiespeichers (3) ist.

6.  Verfahren nach einem der vorhergehenden Ansprüche, **dadurch gekennzeichnet, dass** bei wesentlicher Übereinstimmung des Zwischenkreisspannungsmittelwertes ($\overline{U_{DC}}$) mit dem vorgebbaren Schwellwert ($U_{DCS}$) der Energiespeicher (3) mittels der Stromrichterschaltung (2) mit einem Verbindungsanschluss (M) des ersten Kondensators ($C_1$) mit dem zweiten Kondensator ($C_2$) verbunden wird.

7.  Vorrichtung zur Durchführung eines Verfahrens zur Symmetrierung eines Dreipunkt-Gleichspannungszwischenkreises (1) mit einer Stromrichterschaltung (2), welche mit einem ersten Kondensator ($C_1$) und mit einem zweiten Kondensator ($C_2$) des Dreipunkt-Gleichspannungszwischenkreises (1) verbunden ist, und mit einer Ansteuerschaltung (4), welche einen Mittelwertbildner (5) zur Bildung eines Zwischenkreisspannungsmittelwertes ($\overline{U_{DC}}$) aus einer ersten am ersten Kondensator ($C_1$) anliegenden Zwischenkreisspannung ($U_{DC1}$) und aus einer zweiten am zweiten Kondensator ($C_2$) anliegenden Zwischenkreisspannung ($U_{DC2}$) umfasst, wobei die Stromrichterschaltung (2) mit der Ansteuerschaltung (4) verbunden ist, wobei

die Ansteuerschaltung (4) eine Überwachungseinrichtung (6) zur Überwachung des Zwischenkreisspannungsmittelwertes ($\overline{U_{DC}}$) auf einen vorgebbaren Schwellwert ($U_{DCS}$) hin aufweist, wobei die Überwachungseinrichtung (6) mit dem Mittelwertbildner (5) verbunden ist,

die Stromrichterschaltung (2) einen ersten ansteuerbaren Schalter (18) und einen zweiten ansteuerbaren Schalter (19) aufweist,

ein Energiespeicher (3) vorgesehen ist, der mit dem ersten Schalter (18) und mit dem zweiten Schalter (19) verbunden ist, und

der erste Schalter (18) und der zweite Schalter (19) mit der Ansteuerschaltung (4) verbunden ist, wobei der erste Schalter (18) und der zweite Schalter (19) mit dem ersten Kondensator ($C_1$) und dem zweiten Kondensator ($C_2$) verbindbar ist.

8. Vorrichtung nach Anspruch 7, **dadurch gekennzeichnet, dass** die Ansteuerschaltung (4) eine erste Schaltzustandsausgabeeinrichtung (8) und eine zweite Schaltzustandsausgabeeinrichtung (15) aufweist, wobei die erste Schaltzustandsausgabeeinrichtung (8) mit einem ersten Vergleicher (7) der Überwachungseinrichtung (6) verbunden ist und die zweite Schaltzustandsausgabeeinrichtung (15) mit einem zweiten Vergleicher (16) der Überwachungseinrichtung (6) verbunden ist.

9. Vorrichtung nach Anspruch 8, dass die erste Schaltzustandsausgabeeinrichtung (8) eine erste monostabile Kippstufe (9) mit einer vorgebbaren Zeit ($T_B$) zur Umschaltung in einen stabilen Zustand und eine zweite monostabile Kippstufe (10) mit der vorgebbaren Zeit ($T_B$) zur Umschaltung in einen stabilen Zustand umfasst, wobei die erste monostabile Kippstufe (9) der ersten Schaltzustandsausgabeeinrichtung (8) mit dem ersten Vergleicher (7) verbunden ist, und

dass die zweite Schaltzustandsausgabeeinrichtung (15) eine erste monostabile Kippstufe (14) mit der vorgebbaren Zeit ($T_B$) zur Umschaltung in einen stabilen Zustand und eine zweite monostabile Kippstufe (13) mit der vorgebbaren Zeit ($T_B$) zur Umschaltung in einen stabilen Zustand umfasst, wobei die erste monostabile Kippstufe (14) der zweiten Schaltzustandsausgabeeinrichtung (15) mit dem zweiten Vergleicher (16) verbunden ist.

10. Vorrichtung nach Anspruch 9, **dadurch gekennzeichnet, dass** die vorgebbare Zeit ($T_B$) in Abhängigkeit der Werte des ersten Kondensators ($C_1$), des zweiten Kondensators ($C_2$) und des Energiespeichers (3) bestimmbar ist.

11. Vorrichtung nach Anspruch 10, **dadurch gekennzeichnet, dass** die vorgebbare Zeit ($T_B$) nach Massgabe der Formel

$$T_B = \pi \cdot \sqrt{2L_C \cdot \frac{C \cdot \frac{C_1 + C_2}{2}}{C + \frac{C_1 + C_2}{2}}}$$

bestimmbar ist, wobei C ein Kondensator des Energiespeichers 3 und $L_C$ eine Induktivität des Energiespeichers (3) ist.

12. Vorrichtung nach einem der Ansprüche 9 bis 11, **dadurch gekennzeichnet, dass** der Ausgang der ersten monostabilen Kippstufe (9) der ersten Schaltzustandsausgabeeinrichtung (8) mit der zweiten monostabilen Kippstufe (10) der ersten Schaltzustandsausgabeeinrichtung (8) mittelbar verbunden ist, und

dass der Ausgang der ersten monostabilen Kippstufe (9) der ersten Schaltzustandsausgabeeinrichtung (8) mit einer ODER-Logikschaltung (11) der ersten Schaltzustandsausgabeeinrichtung (8) verbunden ist.

13. Vorrichtung nach einem der Ansprüche 9 bis 12, **dadurch gekennzeichnet, dass** der Ausgang ersten monostabilen Kippstufe (14) der zweiten Schaltzustandsausgabeeinrichtung (15) mit der zweiten monostabilen Kippstufe (13) der zweiten Schaltzustandsausgabeeinrichtung (15) mittelbar verbunden ist, und

dass der Ausgang der ersten monostabilen Kippstufe (14) der zweiten Schattzustandsausgabeeinrichtung (15) mit einer ODER-Logikschaltung (12) der zweiten Schaltzustandsausgabeeinrichtung (15) verbunden ist.

14. Vorrichtung nach Anspruch 13 und 14, **dadurch gekennzeichnet, dass** der Ausgang der zweiten monostabilen Kippstufe (10) der ersten Schaltzustandsausgabeeinrichtung (8) mit der ODER-Logikschaltung (12) der zweiten Schaltzustandsausgabeeinrichtung (15) verbunden ist, und

dass der Ausgang der zweiten monostabilen Kippstufe (13) der zweiten Schaltzustandsausgabeeinrichtung (15) mit der ODER-Logikschaltung (11) der ersten Schaltzustandsausgabeeinrichtung (8) verbunden ist.

15. Vorrichtung nach Anspruch 14, **dadurch gekennzeichnet, dass** die Ansteuerschaltung (4) eine Betätigungseinrichtung (17) zur Betätigung des ersten Schalters (18) und des zweiten Schalters (19) aufweist, die mit dem Ausgang der ODER-Logikschaltung (11) der ersten Schaltzustandsausgabeeinrichtung (8) und mit dem Ausgang der ODER-Logikschaltung (12) der zweiten Schaltzustandsausgabeeinrichtung (15) verbunden ist.

**Claims**

1. Method for balancing a three-point DC voltage intermediate circuit (1), in which a converter circuit (2), which is connected to a first capacitor ($C_1$) and to a second capacitor ($C_2$) in the three-point DC voltage intermediate circuit (1), influences the electrical power flow in the three-point DC voltage intermediate circuit (1), and in which an intermediate circuit voltage mean value ($\overline{U_{DC}}$) is formed from a first intermediate circuit voltage ($U_{DC1}$), which is present across the first capacitor ($C_1$), and from a second intermediate circuit voltage ($U_{DC2}$), which is present across the second capacitor ($C_2$), wherein the intermediate circuit voltage mean value ($\overline{U_{DC}}$) is monitored for a threshold value ($U_{DCS}$) which can be predetermined,
if the threshold value ($U_{DCS}$) is significantly exceeded, the first capacitor ($C_1$) is connected by means of the converter circuit (2) to an energy store (3), and the energy store (3) is then connected by means of the converter circuit (2) to the second capacitor ($C_2$), and,
if the threshold value ($U_{DCS}$) is significantly undershot, the second capacitor ($C_2$) is connected to the energy store (3) by means of the converter circuit (2), and the energy store (3) is then connected to the first capacitor ($C_1$) by means of the converter circuit (2).

2. Method according to Claim 1, **characterized in that**, if the threshold value ($U_{DCS}$) is significantly undershot, the first capacitor ($C_1$) is connected to the energy store (3), and the energy store (3) is then connected to the second capacitor ($C_2$), in each case within a time ($T_B$) which can be predetermined.

3. Method according to Claim 1 or 2, **characterized in that**, if the threshold value ($U_{DCS}$) is significantly undershot, the second capacitor ($C_2$) is connected to the energy store (3), and the energy store (3) is then connected to the first capacitor ($C_1$), in each case within a time ($T_B$) which can be predetermined.

4. Method according to Claim 2 or 3, **characterized in that** the time ($T_B$) which can be predetermined is defined as a function of the values of the first capacitor ($C_1$), of the second capacitor ($C_2$) and of the energy store (3).

5. Method according to Claim 4, **characterized in that** the time ($T_B$) which can be predetermined is defined in accordance with the formula:

$$T_B = \pi \cdot \sqrt{2L_C \cdot \frac{C \cdot \dfrac{C_1 + C_2}{2}}{C + \dfrac{C_1 + C_2}{2}}}$$

where C is a capacitor in the energy store 3 and $L_C$ is an inductance in the energy store (3).

6. Method according to one of the preceding claims, **characterized in that**, if the intermediate circuit voltage mean value ($\overline{U_{DC}}$) essentially matches the threshold value ($U_{DCS}$) which can be predetermined, the energy store (3) is connected by means of the converter circuit (2) from a connection (M) of the first capacitor ($C_1$) to the second capacitor ($C_2$).

7. Apparatus for carrying out a method for balancing a three-point DC voltage intermediate circuit (1) having a converter circuit (2) which is connected to a first capacitor ($C_1$) and to a second capacitor ($C_2$) of the three-point DC voltage intermediate circuit (1), and having a drive circuit (4) which has a mean-value forming device (5) for forming an intermediate circuit voltage mean value ($\overline{U_{DC}}$) from a first intermediate circuit voltage ($U_{DC1}$), which is present across the first capacitor ($C_1$), and from a second intermediate circuit voltage ($U_{DC2}$), which is present across the second capacitor ($C_2$), with the converter circuit (2) being connected to the drive circuit (4), wherein that the drive circuit (4) has a monitoring device (6) for monitoring the intermediate circuit voltage mean value ($\overline{U_{DC}}$) for a threshold value ($U_{DCS}$) which can be predetermined, with the monitoring device (6) being connected to the mean value forming device (5),
the converter circuit (2) has a first drivable switch (18) and a second drivable switch (19),
an energy store (3) is provided, which is connected to the first switch (18) and to the second switch (19), and
the first switch (18) and the second switch (19) are connected to the drive circuit (4), in which case the first switch (18) and the second switch (19) can be connected to the first capacitor ($C_1$) and to the second capacitor ($C_2$).

8. Apparatus according to Claim 7, **characterized in that** the drive circuit (4) has a first switching state output device (8) and a second switching state output device (15), with the first switching state output device (8) being connected to a first comparator (7) in the monitoring device (6), and the second switching state output device (15) being connected to a second comparator (16) in the monitoring device (6).

9. Apparatus according to Claim 8, **characterized in that** the first switching state output device (8) has a first monostable multivibrator (9) with a time ($T_B$) which can be predetermined, for switching to a stable state, and has a second monostable multivibrator (10) with a time ($T_B$), which can be predetermined, for switching to a stable state, with the first monostable multivibrator (9) in the first switching state output device (8) being connected to the first comparator (7), and
**in that** the second switching state output device (15) has a first monostable multivibrator (14) with the time ($T_B$), which can be predetermined, for switching to a stable state, and has a second monostable multivibrator (13) with the time ($T_B$), which can be predetermined, for switching to a stable state, with the first monostable multivibrator (14) in the second switching state output device (15) being connected to the second comparator (16).

10. Apparatus according to Claim 9, **characterized in that** the time ($T_B$) which can be predetermined can be defined as a function of the values of the first capacitor ($C_1$), of the second capacitor ($C_2$) and of the energy store (3).

11. Apparatus according to Claim 10, **characterized in that** the time ($T_B$) which can be predetermined can be defined in accordance with the formula

$$T_B = \pi \cdot \sqrt{2L_C \cdot \frac{C \cdot \dfrac{C_1 + C_2}{2}}{C + \dfrac{C_1 + C_2}{2}}}$$

where C is a capacitor in the energy store (3) and $L_C$ is an inductance in the energy store (3).

12. Apparatus according to one of Claims 9 to 11, **characterized in that** the output of the first monostable multivibrator (9) in the first switching state output device (8) is connected indirectly to the second monostable multivibrator (10) in the first switching state output device (8), and
**in that** the output of the first monostable multivibrator (9) in the first switching state output device (8) is connected to an OR logic circuit (11) in the first switching state output device (8).

13. Apparatus according to one of Claims 9 to 12, **characterized in that** the output of the first monostable multivibrator (14) in the second switching state output device (15) is connected indirectly to the second monostable multivibrator (13) in the second switching state output device (15), and
**in that** the output of the first monostable multivibrator (14) in the second switching state output device (15) is connected to an OR logic circuit (12) in the second switching state output device (15).

14. Apparatus according to Claim 13 or 14,
**characterized in that** the output of the second monostable multivibrator (10) in the first switching state output device (8) is connected to the OR logic circuit (12) in the second switching state output device (15), and
**in that** the output of the second monostable multivibrator (13) in the second switching state output device (15) is connected to the OR logic circuit (11) in the first switching state output device (8).

15. Apparatus according to Claim 14, **characterized in that** the drive circuit (4) has an operating device (17) for operating the first switch (18) and the second switch (19), which operating device (17) is connected to the output of the OR logic circuit (11) in the first switching state output device (8), and to the output of the OR logic circuit (12) in the second switching state output device (15).

**Revendications**

1. Procédé de symétrisation d'un circuit intermédiaire à courant continu à trois niveaux (1), dans lequel un circuit convertisseur de courant (2) raccordé à un premier condensateur ($C_1$) et à un deuxième condensateur ($C_2$) du circuit intermédiaire à courant continu à trois niveaux (1) influence le flux d'énergie électrique du circuit intermédiaire à courant continu à trois niveaux (1), et dans lequel on forme une valeur moyenne de la tension du circuit intermédiaire ($\overline{U_{DC}}$) à partir d'une première tension du circuit intermédiaire ($U_{DC1}$) présente aux bornes du premier condensateur ($C_1$) et d'une deuxième tension du circuit intermédiaire ($U_{DC2}$) présente aux bornes du deuxième condensateur ($C_2$), dans lequel on surveille la valeur moyenne de la tension du circuit intermédiaire ($\overline{U_{DC}}$) par rapport à une valeur de seuil ($U_{DCS}$) prédéterminable, dans lequel en cas de dépassement sensible de la valeur de seuil ($U_{DCS}$), le premier condensateur ($C_1$) est raccordé à un accumulateur d'énergie (3) au moyen du circuit convertisseur de courant (2) et ensuite l'accumulateur d'énergie (3) est raccordé au deuxième condensa-

teur ($C_2$) au moyen du circuit convertisseur de courant (2), et dans lequel en cas de descente sensible en dessous de la valeur de seuil ($U_{DCS}$), le deuxième condensateur ($C_2$) est raccordé à l'accumulateur d'énergie (3) au moyen du circuit convertisseur de courant (2) et ensuite l'accumulateur d'énergie (3) est raccordé au premier condensateur ($C_1$) au moyen du circuit convertisseur de courant (2).

2. Procédé selon la revendication 1, **caractérisé en ce que**, en cas de dépassement sensible de la valeur de seuil ($U_{DCS}$), le raccordement du premier condensateur ($C_1$) à l'accumulateur d'énergie (3) et ensuite le raccordement de l'accumulateur d'énergie (3) au deuxième condensateur ($C_2$) est chaque fois effectué en un temps prédéterminable ($T_B$).

3. Procédé selon la revendication 1 ou 2, **caractérisé en ce que**, en cas de descente sensible en dessous de la valeur de seuil ($U_{DCS}$), le raccordement du deuxième condensateur ($C_2$) à l'accumulateur d'énergie (3) et ensuite le raccordement de l'accumulateur d'énergie (3) au premier condensateur ($C_1$) est chaque fois effectué en un temps prédéterminable ($T_B$).

4. Procédé selon la revendication 2 ou 3, **caractérisé en ce que** le temps prédéterminable ($T_B$) est déterminé en fonction des valeurs du premier condensateur ($C_1$), du deuxième condensateur ($C_2$) et de l'accumulateur d'énergie (3).

5. Procédé selon la revendication 4, **caractérisé en ce que** le temps prédéterminable ($T_B$) est déterminé selon la formule

$$T_B = \pi \cdot \sqrt{2L_C \cdot \frac{C \cdot \frac{C_1 + C_2}{2}}{C + \frac{C_1 + C_2}{2}}}$$

dans laquelle C est un condensateur de l'accumulateur d'énergie (3) et $L_C$ est une inductance de l'accumulateur d'énergie (3).

6. Procédé selon l'une quelconque des revendications précédentes, **caractérisé en ce que**, en cas de concordance sensible de la valeur moyenne de la tension du circuit intermédiaire ($\overline{U_{DC}}$) avec la valeur de seuil prédéterminable ($U_{DCS}$), l'accumulateur d'énergie (3) est raccordé à un point de raccordement (M) du premier condensateur ($C_1$) au deuxième condensateur ($C_2$) au moyen du circuit convertisseur de courant (2).

7. Dispositif pour la réalisation d'un procédé de symétrisation d'un circuit intermédiaire à courant continu à trois niveaux (1) avec un circuit convertisseur de courant (2), qui est raccordé à un premier condensateur ($C_1$) et à un deuxième condensateur ($C_2$) du circuit intermédiaire à courant continu à trois niveaux (1), et avec un circuit de commande (4), qui comprend un calculateur de valeur moyenne (5) pour former une valeur moyenne de la tension du circuit intermédiaire ($\overline{U_{DC}}$) à partir d'une première tension du circuit intermédiaire ($U_{DC1}$) présente aux bornes du premier condensateur ($C_1$) et d'une deuxième tension du circuit intermédiaire ($U_{DC2}$) présente aux bornes du deuxième condensateur ($C_2$), dans lequel le circuit convertisseur de courant (2) est raccordé au circuit de commande (4), dans lequel le circuit de commande (4) comporte un dispositif de surveillance (6) pour la surveillance de la valeur moyenne de la tension du circuit intermédiaire ($\overline{U_{DC}}$) par rapport à une valeur de seuil ($U_{DCS}$) prédéterminable, dans lequel le dispositif de surveillance (6) est raccordé au calculateur de valeur moyenne (5), dans lequel le circuit convertisseur de courant (2) présente un premier commutateur commandable (18) et un deuxième commutateur commandable (19), dans lequel il est prévu un accumulateur d'énergie (3) qui est raccordé au premier commutateur (18) et au deuxième commutateur (19), et dans lequel le premier commutateur (18) et le deuxième commutateur (19) sont raccordés au circuit de commande (4), le premier commutateur (18) et le deuxième commutateur (19) pouvant être raccordés au premier condensateur ($C_1$) et au deuxième condensateur ($C_2$).

8. Dispositif selon la revendication 7, **caractérisé en ce que** le circuit de commande (4) comprend un premier dispositif d'indication de l'état de commutation (8) et un deuxième dispositif d'indication de l'état de commutation (15), dans lequel le premier dispositif d'indication de l'état de commutation (8) est raccordé à un premier comparateur (7) du dispositif de surveillance (6) et le deuxième dispositif d'indication de l'état de commutation (15) est raccordé à un deuxième comparateur (16) du dispositif de surveillance (6).

9. Dispositif selon la revendication 8, **caractérisé en ce que** le premier dispositif d'indication de l'état de commutation (8) comprend une première bascule monostable (9) avec un temps prédéterminable ($T_B$) pour basculer dans un état stable et une deuxième bascule monostable (10) avec le temps prédéterminable ($T_B$) pour basculer dans un état stable, dans lequel la première bascule monostable (9) du premier dispositif d'indication de l'état de commutation (8) est raccordée au premier comparateur (7), et **en ce que** le deuxième dispositif d'indication de l'état de commutation (15) comprend une première bascule monostable (14) avec le temps prédéterminable (T$_B$) pour basculer dans un état stable et une deuxième bascule monostable (13) avec le temps prédéterminable (T$_B$) pour basculer dans un état stable, la première bascule monostable (14) du deuxième dispositif d'indication de l'état de commutation (15) étant raccordée au deuxième comparateur (16).

10. Dispositif selon la revendication 9, **caractérisé en ce que** le temps prédéterminable (T$_B$) est déterminé en fonction des valeurs du premier condensateur (C$_1$), du deuxième condensateur (C$_2$) et de l'accumulateur d'énergie (3).

11. Dispositif selon la revendication 10, **caractérisé en ce que** le temps prédéterminable (T$_B$) peut être déterminé selon la formule

$$T_B = \pi \cdot \sqrt{2L_C \cdot \frac{C \cdot \frac{C_1 + C_2}{2}}{C + \frac{C_1 + C_2}{2}}}$$

dans laquelle C est un condensateur de l'accumulateur d'énergie (3) et L$_C$ est une inductance de l'accumulateur d'énergie (3).

12. Dispositif selon l'une quelconque des revendications 9 à 11, **caractérisé en ce que** la sortie de la première bascule monostable (9) du premier dispositif d'indication de l'état de commutation (8) est raccordée indirectement à la deuxième bascule monostable (10) du premier dispositif d'indication de l'état de commutation (8), et **en ce que** la sortie de la première bascule monostable (9) du premier dispositif d'indication de l'état de commutation (8) est raccordée à un circuit logique OU (11) du premier dispositif d'indication de l'état de commutation (8).

13. Dispositif selon l'une quelconque des revendications 9 à 12, **caractérisé en ce que** la sortie de la première bascule monostable (14) du deuxième dispositif d'indication de l'état de commutation (15) est raccordée indirectement à la deuxième bascule monostable (13) du deuxième dispositif d'indication de l'état de commutation (15), et **en ce que** la sortie de la première bascule monostable (14) du deuxième dispositif d'indication de l'état de commutation (15) est raccordée à un circuit logique OU (12) du deuxième dispositif d'indication de l'état de commutation (15).

14. Dispositif selon les revendications 13 et 14, **caractérisé en ce que** la sortie de la deuxième bascule monostable (10) du premier dispositif d'indication de l'état de commutation (8) est raccordée au circuit logique OU (12) du deuxième dispositif d'indication de l'état de commutation (15), et **en ce que** la sortie de la deuxième bascule monostable (13) du deuxième dispositif d'indication de l'état de commutation (15) est raccordée au circuit logique OU (11) du premier dispositif d'indication de l'état de commutation (8).

15. Dispositif selon la revendication 14, **caractérisé en ce que** le circuit de commande (4) comprend un dispositif d'activation (17) pour actionner le premier commutateur (18) et le deuxième commutateur (19), qui est raccordé à la sortie du circuit logique OU (11) du premier dispositif d'indication de l'état de commutation (8) et à la sortie du circuit logique OU (12) du deuxième dispositif d'indication de l'état de commutation (15).

**Fig. 1**

**Fig. 2**

Fig. 3